(19) Europäisches Patentamt
European Patent Office
Office européen des brevets

(11) EP 4 811 869 A1

(12) **EUROPEAN PATENT APPLICATION**
published in accordance with Art. 153(4) EPC

(43) Date of publication:
**23.09.2026 Bulletin 2026/39**

(21) Application number: **24891563.9**

(22) Date of filing: **29.04.2024**

(51) International Patent Classification (IPC):
***H04W 48/08*** *(2009.01)* ***H04W 72/25*** *(2023.01)*
***H04W 52/02*** *(2009.01)* ***H04W 4/40*** *(2018.01)*
***H04W 24/08*** *(2009.01)* ***H04B 17/318*** *(2015.01)*
***G08G 1/00*** *(2006.01)* ***H04W 84/06*** *(2009.01)*
***H04W 88/04*** *(2009.01)* ***H04W 88/06*** *(2009.01)*

(52) Cooperative Patent Classification (CPC):
**G08G 1/00; H04B 17/318; H04W 4/40; H04W 24/08; H04W 48/08; H04W 52/02; H04W 72/25; H04W 84/06; H04W 88/04; H04W 88/06**

(86) International application number:
**PCT/KR2024/005743**

(87) International publication number:
**WO 2025/105614 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.11.2023 KR 20230158207**

(71) Applicant: **Hyundai Mobis Co., Ltd.**
**Gangnam-gu**
**Seoul 06141 (KR)**

(72) Inventor: **CHOI, Su Han**
**Gwacheon-si, Gyeonggi-do 13839 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD FOR SHARING SYSTEM INFORMATION VIA SIDELINK AND DEVICE THEREFOR**

(57) The present document relates to a method for sharing system information (SI) via a sidelink, and a device therefor. To this end, a method by which a first user equipment (UE) communicates with a network comprises the steps in which the first user equipment: receives a master information block (MIB) among system information (SI) from a specific cell of the network; receives system information block (SIB) 1 on the basis of the MIB information; and transmits the SI to a second user equipment via a sidelink when it is confirmed that the specific cell is a non-terrestrial network (NTN) cell through the information about SIB 1.

FIG. 5

UE2
UE1
Network
MIB
(S510)
SIB 1
(S520)
NTN Cell?
(S530)
SIB 19
(S540)
Sharing SI via SL
(S550)

EP 4 811 869 A1

## Description

### TECHNICAL FIELD

The following description relates to a method for establishing communication by sharing system information SI via a sidelink, and a device therefor.

### BACKGROUND

Various technologies such as LTE, LTE-Advanced, and Wi-Fi are used in wireless communication systems, and 5G is also included in this category. Three major usage scenarios for 5G include (1) enhanced mobile broadband (eMBB), (2) massive machine type communication (mMTC), and (3) ultra-reliable and low latency communications (URLLC). Some use cases may require multiple areas for optimization, and others may focus on only a single key performance indicator (KPI). 5G supports these use cases in a flexible and reliable manner.

Meanwhile, standardization for a non-terrestrial network (NTN) has been actively underway since Release 17 of a 5G standardization process.

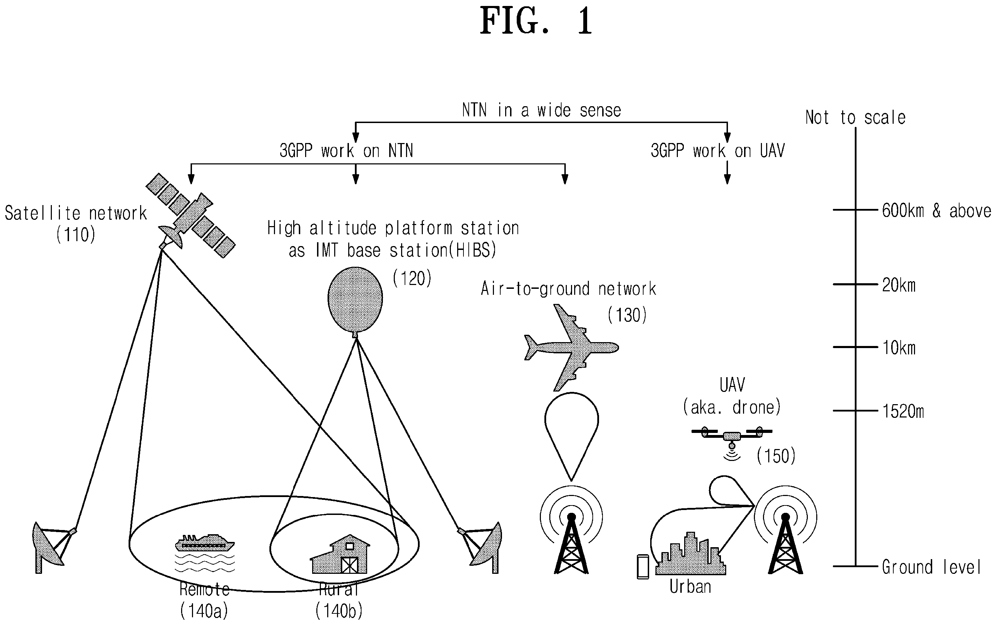

FIG. 1 is a view for describing the concept of an NTN.

Specifically, FIG. 1 is a view showing the concept of various types of NTNs introduced in "5G from Space: An Overview of 3GPP Non-Terrestrial Networks" (authors: Xingqin Lin and four other authors) and NTN may include a satellite network 110, a high-latitude platform station 120 functioning as an IMT base station, an air-to-ground network 130, etc.

As conceptually shown in FIG. 1, such various types of networks have advantages that can provide efficient communication services to remote areas 140 using wide coverage and provide efficient communication services to a user equipment (UE) such as a UAV 150.

However, communication between the NTN and the UE may experience communication delays due to high altitudes, and a disadvantage may be that, for example, there is an unavoidable delay in the UE acquiring SI from the NTN, or high battery consumption occurs.

### DISCLOSURE

### TECHNICAL PROBLEM

To solve the above problems, one aspect of the present disclosure is directed to providing a method and apparatus for performing communication by sharing SI obtained by a specific user equipment (UE) with another UE via a sidelink.

Specifically, the present disclosure proposes determining, by a specific UE, whether a corresponding cell is a non-terrestrial network (NTN) cell based on a master information block received from a network and any one of subsequent system information blocks (SIBs) and determining which SIBs will be shared via a sidelink accordingly.

Meanwhile, embodiments of the present disclosure propose an operational mechanism for how to establish communication with an NTN when a SIB essential for NTN access is not obtained from the perspective of a UE receiving shared SI.

In addition, one embodiment of the present disclosure will describe under what conditions a UE receiving shared SI requests SI for an NTN cell.

In addition, embodiments of the present disclosure will describe various situations in which the SI is shared via a sidelink.

Objects of the present disclosure are not limited to the above object, and other objects that are not described will be able to be clearly understood by those skilled in the art to which the present disclosure pertains from the following description.

### TECHNICAL SOLUTION

To achieve the above objects, in one aspect of the present disclosure, there is provided a method for allowing a first user equipment (UE) to communicate with a network in a mobile communication system, which includes receiving, by the first user equipment, a master information block (MIB) among system information (SI) from a specific cell of the network, receiving a system information block (SIB) 1 based on the MIB information, and transmitting the SI to a second user equipment via a sidelink when it is determined through information of the SIB 1 that the specific cell is a non-terrestrial network (NTN) cell.

In this case, the SI transmitted to the second user equipment may include SIB 19 which is essential for NTN access, and when the specific cell is the NTN cell and the second user equipment does not receive the SIB 19 from the

sidelink, the second user equipment may transmit a message requesting the SIB 19 to the first user equipment via the sidelink.

In addition, when the specific cell is the NTN cell and the second user equipment receives the SIB 19 from the sidelink, the second user equipment may drive a first timer having a validity duration for NTN UL sync information from a time unit indicated by an epoch time, and when not re-receiving the SIB 19 before expiration of the first timer, the second user equipment may transmit a SIB 19 request message to the first user equipment via the sidelink.

Preferably, the transmitting of the message requesting the SIB 19 via the sidelink may be limited to a case in which reference signal received power (RSRP) or reference signal received quality (RSRQ) of the NTN cell measured at the second user equipment is a predetermined threshold or less.

In addition, the transmitting of the message requesting the SIB 19 via the sidelink may include transmitting the message in a case in which the second user equipment operates in a power saving mode.

In addition, the transmitting of the SI to the second user equipment via the sidelink may include transmitting only the SI on an NTN cell in which the RSRP or RSRQ measured through one or more of a synchronization signal block (SSB) or channel state information-reference signal (CSI-RS) received from a plurality of NTN cells is a predetermined threshold or more.

In the above embodiments, the first user equipment and the second user equipment may be located in platooning vehicles, the first user equipment may be located in a leading vehicle (LV), and the second user equipment may be located in a following vehicle (FV).

In addition, the NTN may be located on a low-orbit satellite, and the first user equipment may be determined based on movement path information of the low-orbit satellite.

In addition, the first user equipment may be a user-to-network (U2N) relay user equipment, and the second user equipment may correspond to a remote user equipment.

In addition, the first user equipment and the second user equipment may belong to a single user equipment group, and the first user equipment may correspond to a group head user equipment.

To achieve the above objects, in another aspect of the present disclosure, there is provided a method for allowing a network to communicate with a first user equipment (UE) in a mobile communication system, which includes transmitting, to the first user equipment, a master information block (MIB) among system information (SI) from a specific cell of the network, and transmitting a system information block (SIB) 1 to the first user equipment based on the MIB information, wherein the network indicates through information of the SIB 1 that the specific cell is a non-terrestrial network (NTN) cell, thereby instructing the first user equipment to share the SI with the second user equipment via a sidelink.

In this case, the SI transmitted to the second user equipment may include SIB 19 which is essential for NTN access, and the SIB 19 may include an NTN configuration (NTN-Config) information element.

Accordingly, the instruction to share the SI via the sidelink may be performed through a specific field of the NTN configuration (NTN-Config) information element.

Even in the above embodiments, the first user equipment and the second user equipment may be located in platooning vehicles, the first user equipment may be located in a leading vehicle (LV), and the second user equipment may be located in a following vehicle (FV).

In addition, the NTN may be located on a low-orbit satellite, and the network may determine the first user equipment based on movement path information of the low-orbit satellite.

In addition, the first user equipment may be a user-to-network (U2N) relay user equipment, and the second user equipment may correspond to a remote user equipment.

In addition, the first user equipment and the second user equipment may belong to a single user equipment group, and the first user equipment may correspond to a group head user equipment.

Meanwhile, in still another aspect of the present disclosure, there is provided a device operating as a first user equipment (UE) which communicates with a network in a mobile communication system, which includes at least one processor, and at least one computer memory which is operably connected to the at least one processor and stores instructions which cause the at least one processor to perform operations when executed, wherein the operations include receiving, by the first user equipment, a master information block (MIB) among system information (SI) from a specific cell of the network, receiving a system information block (SIB) 1 based on the MIB information, and transmitting the SI to a second user equipment via a sidelink when it is determined through information of the SIB 1 that the specific cell is a non-terrestrial network (NTN) cell.

In yet another aspect of the present disclosure, there is provided a device operating as a first user equipment (UE) which communicates with a network in a mobile communication system, which includes at least one processor, and at least one computer memory which is operably connected to the at least one processor and stores instructions which cause the at least one processor to perform operations when executed, wherein the operations include receiving, by the first user equipment, a master information block (MIB) among system information (SI) from a specific cell of the network, receiving a system information block (SIB) 1 based on the MIB information, and transmitting the SI to a second user equipment via a sidelink when it is determined through information of the SIB 1 that the specific cell is a non-terrestrial network (NTN) cell.

The network may indicate through information of the SIB 1 that the specific cell is a non-terrestrial network (NTN) cell, thereby instructing the first user equipment to share the SI with the second user equipment via a sidelink.

## ADVANTAGEOUS EFFECTS

According to the embodiments of the present disclosure, communication can be established by sharing the SI obtained by the specific UE with another UE via the sidelink.
Specifically, by suggesting the criterion that determines, by a specific UE, whether the corresponding cell is an NTN cell based on the master information block received from the network and any one of subsequent SIBs and defining which SIBs will be shared via the sidelink accordingly, communication efficiency can be improved.
Meanwhile, in the embodiments of the present disclosure, the operation mechanism is specifically proposed for how to establish communication with the NTN when the SIB essential for NTN access is not obtained from the perspective of the UE receiving the shared SI, thereby enabling stable operation of NTN communication.
In addition, the embodiments of the present disclosure define various situations in which the SI is shared via the sidelink, enabling diverse applications such as platooning, low-orbit satellites, U2N relay, and UE grouping situations.
Effects obtainable from the present disclosure are not limited to the above effects, and other effects that are not mentioned will be able to be clearly understood by those skilled in the art to which the present disclosure pertains from the following description.

## BRIEF DESCRIPTION OF THE DRAWINGS

FIG. 1 is a view for describing the concept of an NTN.
FIGS. 2 and 3 are view showing the concept of sharing SI via a sidelink according to embodiments of the present disclosure.
FIG. 4 is a view for describing a procedure for acquiring SI of a UE in detail.
FIG. 5 is a view for describing the concept of sharing NTN cell-related SI via a sidelink according to one embodiment of the present disclosure.
FIGS. 6 and 7 are views for describing a method for allowing a second user equipment to obtain an SIB essential for NTN access according to embodiments of the present disclosure.
FIG. 8 is a view showing a procedure for establishing sidelink communication according to one embodiment of the present disclosure.
FIG. 9 is a view for describing the application of SI sharing via a sidelink in a platooning situation according to one embodiment of the present disclosure.
FIG. 10 is a view for describing a situation in which a U2N Relay UE and a Remote UE are present according to one embodiment of the present disclosure.
FIG. 11 shows a wireless device applicable to the present technology.

## DETAILED DESCRIPTION

Hereinafter, embodiments of the present disclosure will be described in detail with reference to the accompanying drawings so that those skilled in the art to which the present disclosure pertains may easily carry out the present disclosure. However, the present disclosure may be implemented in various different forms and is not limited to various embodiments described herein. In addition, to clearly describe the present disclosure in the drawings, components irrelevant to the description have been omitted, and throughout the specification, similar components have been denoted by similar reference numerals.
In addition, when the first component is described as "including"the second component, this means further including the third component rather than precluding the third component unless especially stated otherwise.

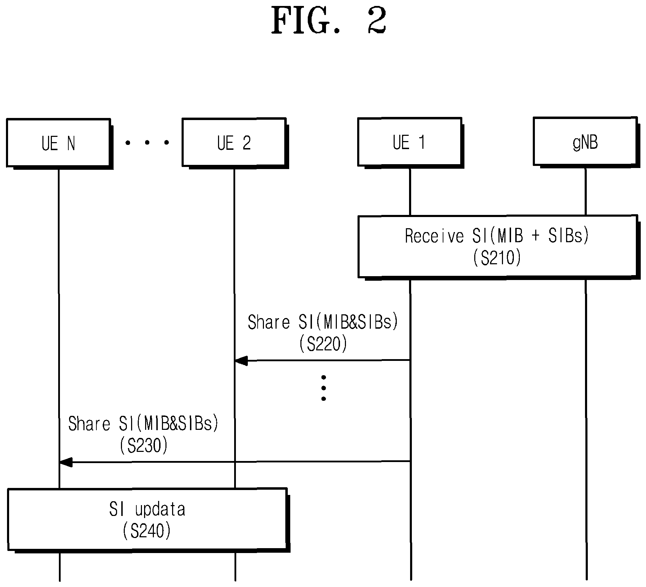

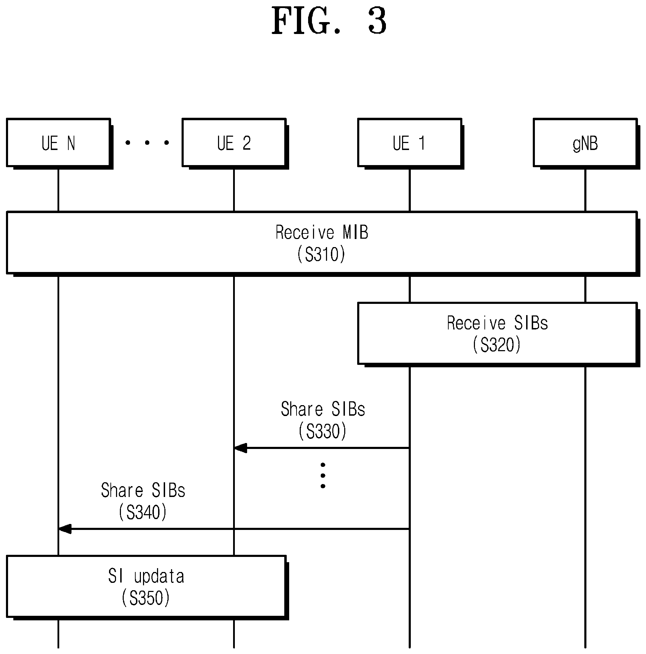

FIGS. 2 and 3 are view showing the concept of sharing SI via a sidelink according to embodiments of the present disclosure.
Referring to FIG. 2, a first user equipment UE1 may perform a procedure S210 of acquiring system information SI from a network, specifically a gNB and thus receiving a master information block (MIB) and SI blocks (SIBs).
In the present embodiment, when the network satisfies a condition including a non-terrestrial network (NTN), it is proposed that UE 1 share the obtained SI with UE 2 and UE 3 (S220, S230). Since the SI contains information common to the entire cell rather than information for a specific UE, other UEs (UE 2 to UE N) may use the shared SI to establish communication without a separate procedure for acquiring their own SI from the network, thereby reducing communication delay and power consumption.

As shown in FIG. 2, an SI update procedure for UE 2 to UE N may be based on the SI shared from UE 1 via a sidelink as described above (S240). Of course, depending on the situation of UE 2 to UE N, they may perform SI updates independently, but as described above, unnecessary delays and power consumption can be prevented by sharing SI via a sidelink.

In the embodiment shown in FIG. 3, unlike FIG. 2, a case in which a MIB and SIBs are received separately is shown.

Specifically, all UEs UE 1 to UE N may receive a MIB directly from a gNB. The MIB is the most fundamental SI for network access among SIs, includes information necessary for receiving the subsequent SIB 1, and in NR, is transmitted over a broadcast channel (BCH) with a 80 ms period. Accordingly, in the present embodiment, unlike the embodiment of FIG. 2, the MIB may be configured such that each UE receives it from the gNB individually and only the subsequent SIBs are shared via a sidelink.

That is, a first UE receives a subsequent SIB 1 and other SIBs from the gNB (S320), and when the corresponding cell is an NTN cell, it is proposed to share it with other UEs UE 2 to UE N via a sidelink (S330, S340). Accordingly, SI updates for other UEs may be performed (S350).

In the embodiments described with reference to FIGS. 2 and 3, the first UE has been described as sharing the obtained SI with other UEs when the corresponding cell is an NTN cell. To this end, the SI acquisition procedure will be described in detail below to describe how the first UE specifically determines whether the cell is an NTN cell and to determine which SI needs to be shared via a sidelink.

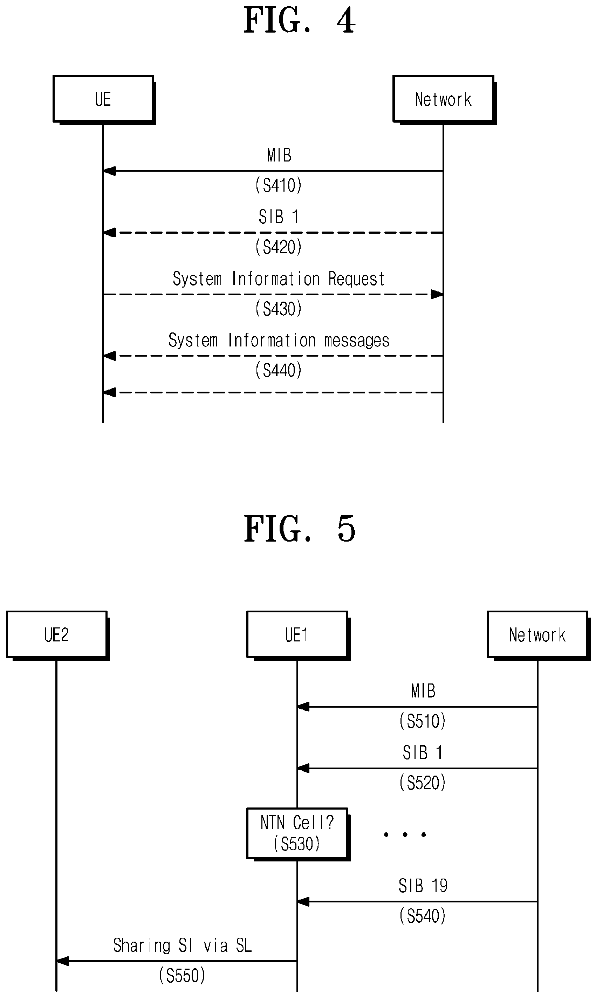

FIG. 4 is a view for describing a procedure for acquiring SI of a UE in detail.

According to the NR standard, for UEs in RRC_IDLE and RRC_INACTIVE states, it is required to receive MIB, SIB 1 to SIB 4, SIB 5 (when the corresponding UE supports E-UTRA), SIB 11 (when idle/inactive measurement is configured for the corresponding UE), SIB 12 (when the corresponding UE supports a sidelink), SIB 13 and SIB 14 (when the corresponding UE supports LTE V2X sidelink communication), SIB 15 (when the corresponding UE is configured to report disaster roaming-related information), SIB 16 (when the corresponding UE supports slice-based cell reselection and receives NSAG information for cell reselection from a higher layer), SIB 17 (when the corresponding UE uses TRS resources for power reduction in the RRC_IDLE and RRC_INACTIVE states), and SIB 19 (when the corresponding UE supports NR via NTN connection).

For a UE in the RRC_CONNECTED state, the network may transmit system information specific to the corresponding UE through an RRC reconfiguration message.

Referring to FIG. 4, the UE may receive an MIB containing the most basic SI and information for receiving the subsequent SIB 1 from the network (S410). As described above, the MIB may be transmitted repeatedly periodically via a BCH, which is one of transport channels, and at a physical layer, the MIB may be transmitted via a physical broadcast channel (PBCH) included in a synchronization signal block (SSB) resource.

Based on the received MIB information, the UE may receive SIB 1 from the network (S420). According to the NR standard, SIB 1 may be transmitted to a physical downlink shared channel (PDSCH) of the physical layer via a DL-SCH, which is one of the transport channels, with a 160 ms period or various periods within 160 ms.

SIB 1 may include information about the availability and scheduling of subsequent SIBs. That is, SIB 1 may include information on whether subsequent SIBs are transmitted on-demand and which SIBs are mapped to an SI message. The SIB 1, as cell-specific information, includes information indicating whether the corresponding cell is an NTN cell.

Referring back to FIG. 4, a UE that has received SIB 1 may transmit a system information request message to the network to acquire an SIB required for operation (S430). In response, the network may transmit the SIB requested by the UE through the system information message (S440).

Among the SIBs following SIB 1, SIB 12 to SIB 14 required for sidelink communication and SIB 19 essential for NTN access will be described.

[Table 1] shows the information elements included in SIB 12.

[Table 1]

```
-- ASN1START
-- TAG-SIB12-START

SIB12-r16 ::=              SEQUENCE {
   segmentNumber-r16           INTEGER (0..63),
   segmentType-r16             ENUMERATED {notLastSegment, lastSegment},
   segmentContainer-r16        OCTET STRING
}

SIB12-IEs-r16 ::=           SEQUENCE {
   sl-ConfigCommonNR-r16       SL-ConfigCommonNR-r16,
   lateNonCriticalExtension    OCTET STRING                OPTIONAL,
```

```
    ...,
    [[
    sl-DRX-ConfigCommonGC-BC-r17        SL-DRX-ConfigGC-BC-r17
OPTIONAL,    -- Need R
    sl-DiscConfigCommon-r17             SL-DiscConfigCommon-r17
OPTIONAL,    -- Need R
    sl-L2U2N-Relay-r17                  ENUMERATED {enabled}
OPTIONAL,    -- Need R
    sl-NonRelayDiscovery-r17            ENUMERATED {enabled}
OPTIONAL,    -- Need R
    sl-L3U2N-RelayDiscovery-r17         ENUMERATED {enabled}
OPTIONAL,    -- Need R
    sl-TimersAndConstantsRemoteUE-r17   UE-TimersAndConstantsRemoteUE-r17
OPTIONAL     -- Need R
    ]]
}

SL-ConfigCommonNR-r16 ::=       SEQUENCE {
    sl-FreqInfoList-r16                 SEQUENCE (SIZE (1..maxNrofFreqSL-r16)) OF SL-
FreqConfigCommon-r16    OPTIONAL,    -- Need R
    sl-UE-SelectedConfig-r16            SL-UE-SelectedConfig-r16
OPTIONAL,    -- Need R
    sl-NR-AnchorCarrierFreqList-r16     SL-NR-AnchorCarrierFreqList-r16
OPTIONAL,    -- Need R
    sl-EUTRA-AnchorCarrierFreqList-r16  SL-EUTRA-AnchorCarrierFreqList-r16
OPTIONAL,    -- Need R
    sl-RadioBearerConfigList-r16        SEQUENCE (SIZE (1..maxNrofSLRB-r16)) OF SL-
RadioBearerConfig-r16     OPTIONAL,    -- Need R
    sl-RLC-BearerConfigList-r16         SEQUENCE (SIZE (1..maxSL-LCID-r16)) OF SL-RLC-
BearerConfig-r16       OPTIONAL,    -- Need R
    sl-MeasConfigCommon-r16             SL-MeasConfigCommon-r16
OPTIONAL,    -- Need R
```

```
  sl-CSI-Acquisition-r16             ENUMERATED {enabled}
OPTIONAL,    -- Need R
  sl-OffsetDFN-r16                   INTEGER (1..1000)
OPTIONAL,    -- Need R
  t400-r16                    ENUMERATED {ms100, ms200, ms300, ms400, ms600, ms1000,
ms1500, ms2000} OPTIONAL,    -- Need R
  sl-MaxNumConsecutiveDTX-r16        ENUMERATED {n1, n2, n3, n4, n6, n8, n16, n32}
OPTIONAL,    -- Need R
  sl-SSB-PriorityNR-r16              INTEGER (1..8)
OPTIONAL     -- Need R
}

SL-NR-AnchorCarrierFreqList-r16 ::=  SEQUENCE (SIZE (1..maxFreqSL-NR-r16)) OF
ARFCN-ValueNR

SL-EUTRA-AnchorCarrierFreqList-r16 ::= SEQUENCE (SIZE (1..maxFreqSL-EUTRA-r16))
OF ARFCN-ValueEUTRA

SL-DiscConfigCommon-r17 ::=   SEQUENCE {
  sl-RelayUE-ConfigCommon-r17   SL-RelayUE-Config-r17,
  sl-RemoteUE-ConfigCommon-r17  SL-RemoteUE-Config-r17
}

-- TAG-SIB12-STOP
-- ASN1STOP
```

Among various information elements in [Table 1], the sidelink E-UTRA anchor carrier frequency list (sl-EUTRA-AnchorCarrierFreqList) and the side link-frequency information list (sl-FreqInfoList) are information elements that provide frequency information for establishing sidelink communication in NR.

In addition, a sidelink user-to-network (U2N) repeater (sl-L2U2N-Relay) is an information element that indicates whether to support a U2N repeater, as will be described below.

Meanwhile, [Table 2] shows the information elements included in SIB 13.

[Table 2]

```
-- ASN1START
-- TAG-SIB13-START

SIB13-r16 ::=                  SEQUENCE {
    sl-V2X-ConfigCommon-r16          OCTET STRING,
    dummy                            OCTET STRING,
    tdd-Config-r16                   OCTET STRING,
    lateNonCriticalExtension         OCTET STRING                OPTIONAL,
    ...
}

-- TAG-SIB13-STOP
-- ASN1STOP
```

Specifically, among the information elements shown in [Table 2], Sidelink - V2X - Common Configuration (sl-V2X-ConfigCommon-r16) is an information element corresponding to SIB type 21 of the LTE standard and includes common system information for LTE V2X communication.

Meanwhile, [Table 3] shows the information elements included in SIB 14.

[Table 3]

```
-- ASN1START
-- TAG-SIB14-START

SIB14-r16 ::=                  SEQUENCE {
    sl-V2X-ConfigCommonExt-r16       OCTET STRING,
    lateNonCriticalExtension         OCTET STRING                OPTIONAL,
    ...
}

-- TAG-SIB14-STOP
-- ASN1STOP
```

Specifically, among the information elements shown in [Table 3], sidelink-V2X-ConfigCommonExt (sl-V2X-

ConfigCommonExt-r16) is an information element corresponding to SIB type 26 in the LTE standard and includes extended system information for LTE V2X communication.

With respect to [Table 1] to [Table 3], the SIB 13 to SIB 15 may be referred to as SI required for sidelink communication. Accordingly, hereinafter, the "SI required for sidelink communication" refers to SIB 13 to SIB 15 described above based on the NR standard, or "some" thereof. The term "some" is, for example, that in some cases, sidelink communication may be established based on LTE V2X without needing to receive extended system information transmitted via SIB 14.

Meanwhile, [Table 4] shows information elements included in SIB 19 related to NTN communication.

[Table 4]

```
-- ASN1START
-- TAG-SIB19-START

SIB19-r17 ::= SEQUENCE {
   ntn-Config-r17                  NTN-Config-r17                        OPTIONAL,      --
Need R
   t-Service-r17                  INTEGER (0..549755813887)              OPTIONAL,      -
- Need R
   referenceLocation-r17            ReferenceLocation-r17                 OPTIONAL,      -
- Need R
   distanceThresh-r17              INTEGER(0..65525)                     OPTIONAL,      --
Need R
   ntn-NeighCellConfigList-r17        NTN-NeighCellConfigList-r17
OPTIONAL,       -- Need R
   lateNonCriticalExtension          OCTET STRING                          OPTIONAL,
   ...,
   [[
```

```
  ntn-NeighCellConfigListExt-v1720        NTN-NeighCellConfigList-r17
OPTIONAL       -- Need R
  ]]
}

NTN-NeighCellConfigList-r17 ::=        SEQUENCE (SIZE(1..maxCellNTN-r17))  OF NTN-
NeighCellConfig-r17

NTN-NeighCellConfig-r17 ::=           SEQUENCE {
  ntn-Config-r17                 NTN-Config-r17                     OPTIONAL,     --
Need R
  carrierFreq-r17                ARFCN-ValueNR                      OPTIONAL,     --
Need R
  physCellId-r17                 PhysCellId                         OPTIONAL      -- Need
R
}

-- TAG-SIB19-STOP
-- ASN1STOP
```

Among various information elements in [Table 4], the NTN configuration (ntn-Config) information element may include ephemeris data, common TA parameters, k_offset, validity duration for UL sync information, and epoch time information epochTime.

In addition, an NTN neighbor cell configuration list (ntn-NeighCellConfigList) and an NTN neighbor cell configuration list expansion (NTN NeighCellConfigListExt) information elements may represent a list of NTN neighbor cells, the NTN configuration (ntn-Config) information elements of each neighbor cell, a carrier frequency, and a physical cell ID.

Other SIB 19 information shown in [Table 4] may be considered essential information elements for NTN access.

During the process of acquiring SI shown in FIG. 4, SIBs other than SIB 1, such as SIBs 12 to 14 and 19, may be obtained in an on-demand form based on the transmission of the UE's system information request message (S430).

FIG. 5 is a view for describing the concept of sharing NTN cell-related SI via a sidelink according to one embodiment of the present disclosure.

In the present embodiment, the first UE may first receive an MIB among various SIs from a specific cell of the network (S510) and receive SIB 1 based on the received MIB information (S520).

In the present embodiment, when the specific cell is an NTN cell as described above, it is proposed to share the received SI with the second UE via a sidelink (S550), and whether the specific cell is an NTN cell may be determined based on SIB 1 received in operation S520 (S530).

The embodiment of FIG. 5 shows a case in which, after determining that the specific cell is an NTN cell (S530), the subsequently received SIBs, particularly SIB 19 (S540), are transmitted to the second UE via a sidelink (S550). However, prior to the determining of whether the corresponding cell is an NTN cell (S530), the first UE may obtain SIs including SIB 19 in advance, and when it is determined that the corresponding cell is an NTN cell, the first UE may immediately share the SIs with the second UE.

In the present embodiment, it is assumed that the first UE and the second UE have a PC5 interface for sidelink connection formed in advance. That is, the first UE and the second UE may have already formed a sidelink based on SIB 12 to SIB 14 information, and in some cases, when the second UE corresponds to a Remote UE, the first UE may transmit the received sidelink communication-related SIB to the second UE to form a sidelink.

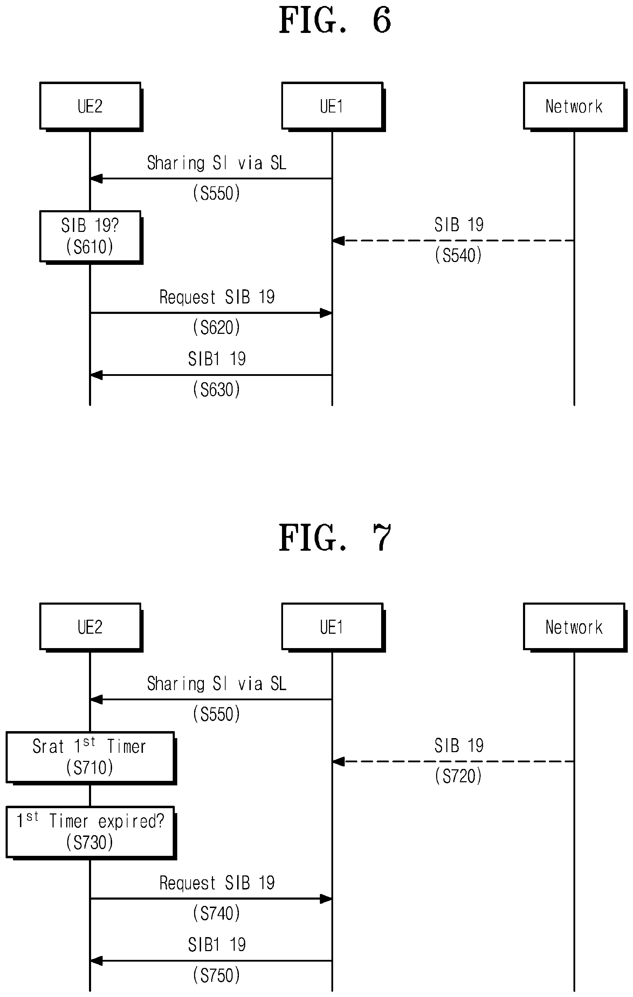

FIGS. 6 and 7 are views for describing a method for allowing a second user equipment to obtain an SIB essential for NTN access according to embodiments of the present disclosure.

In the embodiment described above with reference to FIG. 5, the SI transmitted to the second UE via a sidelink (S550) may include various SIs, including MIB and SIB 1. In some cases, as described above with reference to FIG. 2, all SIs may be shared via a sidelink, and as described above with reference to FIG. 3, the MIB may be transmitted directly to all UEs via the network, but only subsequent SIBs may be shared via a sidelink, or the MIB and SIB 1 may be transmitted directly to all UEs via the network, but only subsequent SIBs are shared via a sidelink.

However, in the present embodiment, focusing on obtaining SIB 19, which is essential for NTN access among the shared SIs, the following mechanisms are proposed.

First, as shown in FIG. 6, the second UE may determine whether SIB 19 is included in the shared SI (S610). When the cell is an NTN cell and does not receive SIB 19 from the sidelink, the second UE may transmit a message requesting SIB 19 to the first UE via the sidelink (S620).

Accordingly, the first UE may respond to the request message by sending a reply message containing SIB 19 (S630). When the updated SIB 19 is received via the network (S540) after the SI is shared with the second UE via the sidelink (S550), the first UE preferably responds based on the latest SIB 19 at the time of receiving the SIB 19 request message.

Meanwhile, in the embodiment of FIG. 7, it is assumed that the second UE receives SI from the first UE (S550) and that the shared SI includes SIB 19.

In this way, when the second UE receives SIB 19 via the sidelink, it is proposed to drive a first timer having a validity duration for UL sync information from a time unit (in the case of NR, a subframe) indicated by the epoch time described above with reference to [Table 4] (S710). This is to manage an update cycle, as updating SIB 19 is required prior to the corresponding validity duration to maintain uplink synchronization for NTN access.

When SIB 19 is not received again before the expiration of the first timer (S730), the second UE may transmit a SIB 19 request message to the first UE via the sidelink (S740). Accordingly, the first UE may retransmit the latest SIB 19 information to the second UE via the sidelink at the time of receiving the SIB 19 request message (S750).

FIG. 7 shows a case in which, after SIB 19 is shared with the second UE in operation S550, the updated SIB 19 is received from the network (S720). In this case, the SIB 19 transmitted to the second UE in operation S750 may be the SIB 19 received in operation S720.

In the above embodiment according to FIG. 6 or 7, the transmission of the message requesting SIB 19 via the sidelink (S620, S740) is preferably limited to cases in which reference signal received power (RSRP) or reference signal received quality (RSRQ) of the NTN cell measured at the second UE is a predetermined threshold or less. For example, when the second UE also has an NTN connection with the corresponding NTN cell and the RSRP/RSRQ of the corresponding NTN cell is the predetermined threshold or more, it may be more efficient for the second UE to directly request SIB 19 from the corresponding NTN cell than to request it from the first UE via the sidelink.

In addition, in the above embodiment according to FIG. 6 or 7, the transmission of the message requesting SIB 19 via the sidelink (S620, S740) may be configured to be performed when the second UE is operating in a power saving mode. This is because power consumption may increase when the second UE directly transmits a SIB 19 request message to the network when the second UE is operating in the power saving mode.

Meanwhile, in the above embodiments, the transmission of SI by the first UE to the second UE via the sidelink (S550) may be configured to transmit only the SI for an NTN cell in which the RSRP or RSRQ measured through one or more of a synchronization signal block (SSB) or a channel state information-reference signal (CSI-RS) received from a plurality of NTN cells is the predetermined threshold or more. That is, among a plurality of NTN cells, it can be efficient to share SI with a peer-UE for a cell in which the quality of the beam observed by the first UE is a certain level or more.

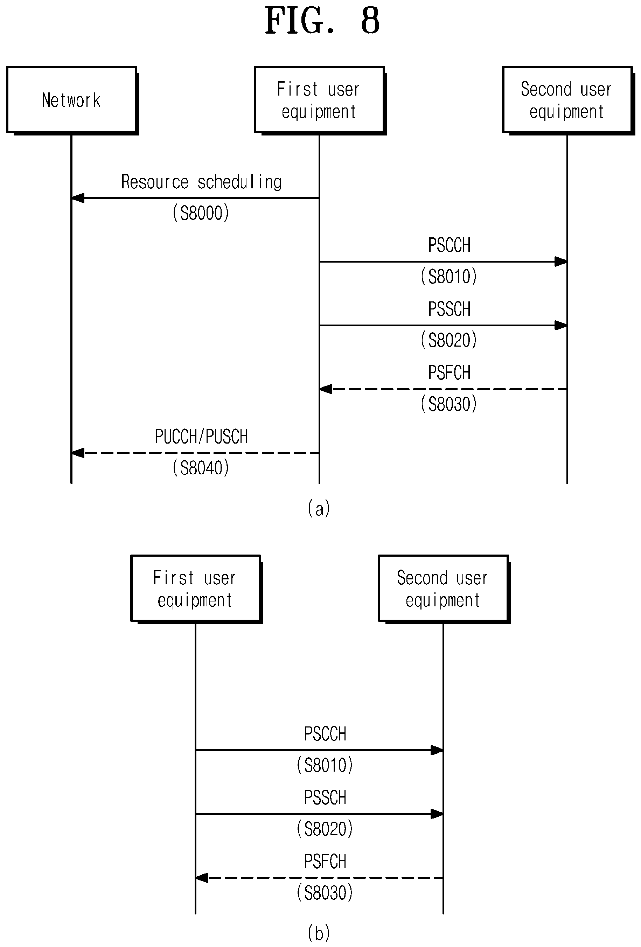

FIG. 8 is a view showing a procedure for establishing sidelink communication according to one embodiment of the present disclosure.

The embodiment of FIG. 8 may be combined with various embodiments of the present disclosure. In various embodiments of the present disclosure, the "transmission mode" may be referred to as a "mode" or a "resource allocation mode." Hereinafter, for convenience of description, the transmission mode in LTE may be referred to as an LTE transmission mode, and the transmission mode in NR may be referred to as an NR resource allocation mode.

Specifically, FIG. 8A shows terminal operations related to LTE transmission mode 1, LTE transmission mode 3, or NR resource allocation mode 1. For example, LTE transmission mode 1 may be applied to general SL communication, and LTE transmission mode 3 may be applied to V2X communication.

Meanwhile, FIG. 8B shows terminal operations related to LTE transmission mode 2, LTE transmission mode 4, or NR resource allocation mode 2.

Referring to FIG. 8A, in LTE transmission mode 1, LTE transmission mode 3, or NR resource allocation mode 1, a base station may schedule SL resources to be used by the terminal for SL transmission (S8000). At this time, the received scheduling information may be transmitted through SIB 12 to SIB 14.

For example, the base station may transmit information on SL resources and/or information on UL resources to the first terminal. The UL resources may include PUCCH resources and/or PUSCH resources. In addition, the UL resources may be resources for reporting SL HARQ feedback to the base station.

The first terminal may receive information on dynamic grant (DG) resources and/or information on configured grant (CG) resources from the base station. The CG resources may include a CG Type 1 resource or a CG Type 2 resource. In the present specification, the DG resources may be resources that the base station sets/assigns to the first terminal through downlink control information (DCI). In addition, in the present specification, the CG resources may be (periodic) resources that the base station sets/assigns to the first terminal through DCI and/or RRC messages. For example, in the case of the CG Type 1 resource, the base station may transmit an RRC message containing information on the CG resource to the first terminal. In the case of the CG Type 2 resource, the base station may transmit an RRC message containing information on the CG resource to the first terminal, and the base station may transmit a DCI related to the activation or release of the CG resource to the first terminal.

In operation S8010, the first terminal may transmit a PSCCH (e.g., sidelink control information (SCI) or 1st-stage SCI) to the second terminal based on the resource scheduling. In operation S8020, the first terminal may transmit a PSSCH (e.g., 2nd-stage SCI, MAC PDU, data, etc.) related to the PSCCH to the second terminal. In operation S8030, the first terminal may receive a physical sidelink feedback channel (PSFCH) associated with PSCCH/PSSCH from the second terminal. For example, HARQ feedback information (e.g., NACK information or ACK information) may be received from the second terminal via the PSFCH. In operation S8040, the first terminal may transmit/report the HARQ feedback information to the base station via PUCCH or PUSCH. For example, the HARQ feedback information reported to the base station may be information generated by the first terminal based on the HARQ feedback information received from the second terminal. In addition, the HARQ feedback information reported to the base station may be information generated by the first terminal based on pre-set rules. The DCI may be a DCI for SL scheduling. The format of the DCI may be DCI format 3_0 or DCI format 3_1.

Table 5 shows an example of a DCI for SL scheduling.

[Table 5]

| Format 3_0 |
|---|
| - Resource pool index - $\lceil \log_2 I \rceil$ bits, where *I* is the number of resource pools for transmission configured by the higher layer parameter *sl-TxPoolScheduling.*<br>- Time gap - 3 bits determined by higher layer parameter *sl-DCI-ToSL-Trans*<br>- HARQ process number - 4 bits<br>- New data indicator - 1 bit<br>- Lowest index of the subchannel allocation to the initial transmission - $\lceil \log_2(N_{\text{subChannel}}^{\text{SL}}) \rceil$ bits<br>- SCT format 1-A fields:<br>- Frequency resource assignment.<br>- Time resource assignment.<br>- PSFCH-to-HARQ feedback timing indicator - $\lceil \log_2 N_{\text{fb_timing}} \rceil$ bits, where $N_{\text{fb_timing}}$ is the number of entries in the higher layer parameter *sl-PSFCH-ToPUCCH*<br>- PUCCH resource indicator - 3 bits.<br>- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.<br>- Counter sidelink assignment index - 2 bits<br>- 2 bits if the UE is configured with *pdsch-HARQ-ACK-Codebook = dynamic*<br>- 2 bits if the UE is configured with *pdsch-HARQ-ACK-Codebook = semi-static*<br>- Padding bits, if required |
| Format 3_1 |
| - Timing offset - 3 bits determined by higher layer parameter *sl-TimeOffsetEUTRA*<br>- Carrier indicator -3 bits.<br>- Lowest index of the subchannel allocation to the initial transmission - $\lceil \log_2(N_{\text{subchannel}}^{\text{SL}}) \rceil$ bits. |

(continued)

| Format 3_1 |
|---|
| - Frequency resource location of initial transmission and retransmission<br>- Time gap between initial transmission and retransmission<br>- SL index - 2 bits<br>- SL SPS configuration index - 3 bits.<br>- Activation/release indication 1 bit. |

Referring to FIG. 8B, in LTE transmission mode 2, LTE transmission mode 4, or NR resource allocation mode 2, the terminal may determine an SL transmission resource within an SL resource set by the base station/network or a pre-set SL resource. The set SL resource or the pre-set SL resource may be a resource pool. For example, the terminal may autonomously select or schedule resources for SL transmission. The terminal may perform SL communication by independently selecting resources within a configured resource pool. For example, the terminal may independently select resources within a selection window by performing sensing and resource (re)selection procedures. The sensing may be performed on a subchannel basis.

In operation S8010, the first terminal that has independently selected resources within the resource pool may use the resources to transmit PSCCH (e.g., SCI or 1st-stage SCI) to the second terminal. In operation S8020, the first terminal may transmit a PSSCH (e.g., 2nd-stage SCI, MAC PDU, data, etc.) related to the PSCCH to the second terminal. In operation S8030, the first terminal may receive PSFCH associated with said PSCCH/PSSCH from the second terminal.

Referring to FIG. 8A or 8B, the first terminal may transmit SCI to the second terminal over the PSCCH. Alternatively, the first terminal may transmit two consecutive SCIs (e.g., 2-stage SCIs) to the second terminal over the PSCCH and/or PSSCH. In this case, the second terminal may decode the two consecutive SCIs (e.g., 2-stage SCIs) to receive the PSSCH from the first terminal. In the present specification, the SCI transmitted over the PSCCH may be referred to as 1st SCI, 1st SCI, 1st-stage SCI, or 1st-stage SCI format, and the SCI transmitted over the PSSCH may be referred to as 2nd SCI, 2nd SCI, 2nd-stage SCI, or 2nd-stage SCI format. For example, the 1st-stage SCI format may include SCI format 1-A, and the 2nd-stage SCI format may include SCI format 2-A and/or SCI format 2-B.

Various situations in which the SI is used will be described below.

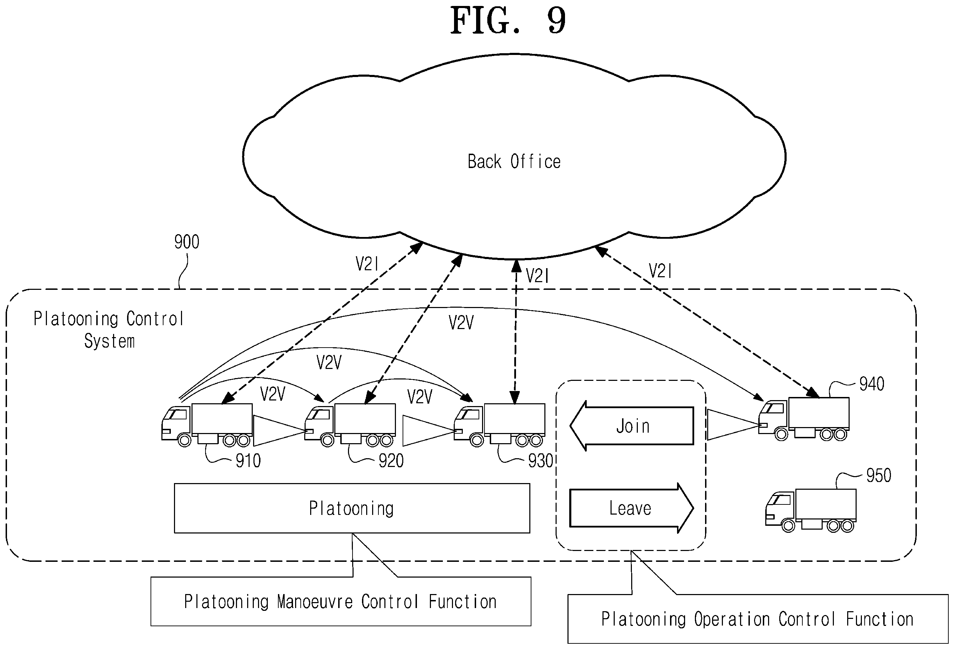

FIG. 9 is a view for describing the application of SI sharing via a sidelink in a platooning situation according to one embodiment of the present disclosure.

A platooning control system 100 proposes a comprehensive concept including a leading vehicle (LV) 910 constituting platooning, one or more following vehicles (FV) 920 and 930, and other vehicles (potential FVs 940 and 950) that have not yet joined/cannot join the platooning. As shown in FIG. 9, vehicle-to-vehicle (V2V) communication may be established between vehicles, and vehicle-to-infrastructure (V2I) communication may be established with the back office managing such platooning.

The LV 910 constituting platooning and one or more FVs 920 and 930 may be managed by a platooning maneuver control function, and the joining and/or withdrawal of PFVs may be managed by a platooning operation control function.

In this situation, it may be assumed that each of the first UE and the second UE in the above embodiments are located in the platooning vehicles 910, 920, 930, 940, and 950. In this case, the first UE may be disposed on the LV 910 of FIG. 9 to directly acquire SI from the network, and the SI obtained in this way may be shared with the second UE located on the FVs 920 and 930 or the vehicles 940 and 950 intending to join platooning via a V2V sidelink.

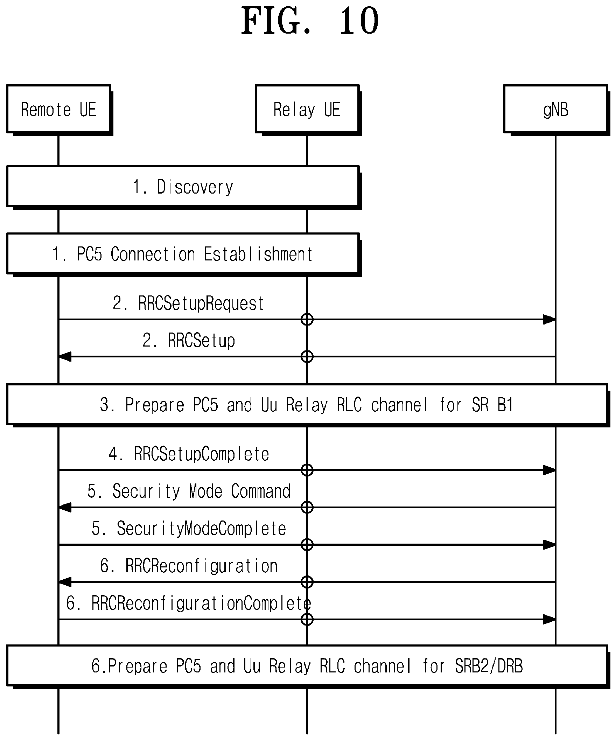

FIG. 10 is a view for describing a situation in which a U2N Relay UE and a Remote UE are present according to one embodiment of the present disclosure.

A U2N relay situation refers to a situation in which a Remote UE receives corresponding information through a U2N Relay UE when it is difficult for the Remote UE to communicate directly with a network (specifically, a gNB).

That is, in the above embodiment, the UE that independently obtains SI from the gNB is the U2N Relay UE, and the UE that receives the SI via the sidelink may correspond to a case in which the Remote UE receives the SI.

In step 1 of FIG. 10, the U2N Remote UE and the U2N Relay UE perform a discovery procedure, and based on this, may establish a PC5 RRC connection.

In step 2, the Remote UE may transmit an RRC Setup request message (also referred to as RRCReestablishmentRequest or RRCResumeRequest) to the gNB via the PC5 RRC-connected Relay UE.

Based on this, in step 3, PC5 and Uu RLC channels for SRB1 may be prepared. In the present embodiment, it is proposed that the Relay UE transmit the SI obtained from the gNB through the PC5 interface.

In step 4, based on the information received in step 2, the gNB may transmit an RRC Setup completion message to the Remote UE via the Relay UE.

Subsequently, in step 5, settings related to a security mode may be configured, and in step 6, an RRC

reconfiguration procedure may be performed according to the U2N Relay situation for SRB2/DRBs.

Meanwhile, in another embodiment of the present disclosure, the above UEs belong to a single UE group, and the UE that updates SI independently via the gNB may correspond to a group head, and the UE that receives the SI may correspond to the UE supported by the corresponding group head.

In still another embodiment of the present disclosure, assuming that the above NTN is located on a low-orbit satellite, the first UE, which directly obtains SI and shares the SI with other UEs via the sidelink, may be operated to be determined based on flight path information of the low-orbit satellite.

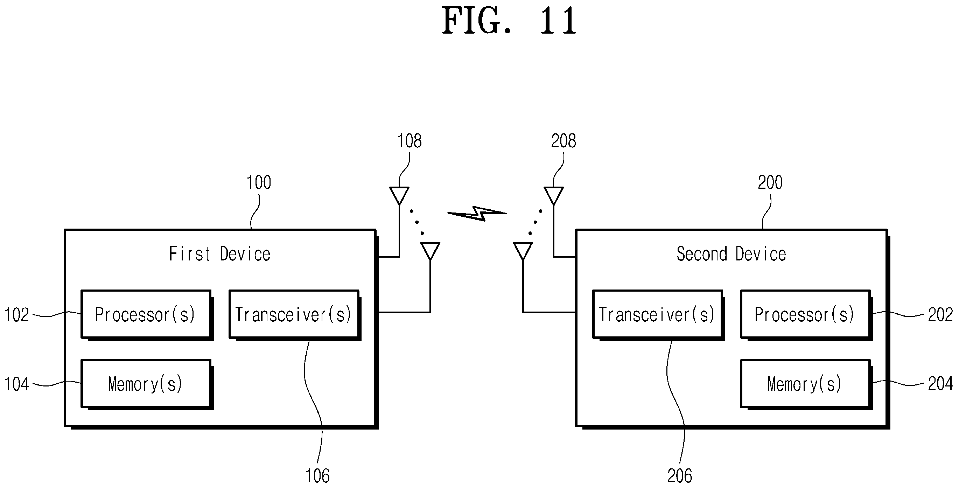

FIG. 11 shows a wireless device applicable to the present technology.

Referring to FIG. 11, a first wireless device 100 and a second wireless device 200 may transmit and receive wireless signals through various wireless access technologies (e.g., LTE, NR). Here, the first wireless device 100 and the second wireless device 200 may correspond to UE 1 and UE 2 of FIG. 5, respectively, or to UE1 and gNB of FIG. 5, respectively.

The first wireless device 100 may include one or more processors 102 and one or more memories 104 and further include one or more transceivers 106 and/or one or more antennas 108. The processor 102 may be configured to control the memory 104 and/or the transceiver 106 and implement the descriptions, functions, procedures, proposals, methods and/or operation flowcharts disclosed in the present document. For example, the processor 102 may process information in the memory 104 to generate first information/signal and transmit a radio signal including the first information/signal via the transceiver 206. In addition, the processor 102 may receive a radio signal including second information/signal via the transceiver 106 and store information obtained by processing the second information/signal in the memory 104. The memory 104 may be connected to the processor 102 and may store various information related to the operation of the processor 102. For example, the memory 104 may store software code including instructions for performing some or all of processes controlled by the processor 102 or performing the descriptions, functions, procedures, proposals, methods, and/or operation flowcharts disclosed in the present document. Here, the processor 102 and the memory 104 may be portions of a communication modem/circuit/chip designed to implement wireless communication technology (e.g., LTE E-UTRA, 5G NR). The transceiver 106 may be connected to the processor 102 and may transmit and/or receive wireless signals through one or more antennas 108. The transceiver 106 may include a transmitter and/or a receiver. The transceiver 106 may be used interchangeably with a radio frequency (RF) unit. In the present disclosure, the wireless device may refer to a communication modem/circuit/chip.

The second wireless device 200 may include one or more processors 202 and one or more memories 204 and further include one or more transceivers 206 and/or one or more antennas 208. The processor 202 may be configured to control the memory 204 and/or the transceiver 106 and implement the descriptions, functions, procedures, proposals, methods and/or operation flowcharts disclosed in the present document. For example, the processor 202 may process information in the memory 204 to generate third information/signal and transmit a radio signal including the third information/signal via the transceiver 206. In addition, the processor 202 may receive a radio signal including fourth information/signal via the transceiver 206 and store information obtained by processing the fourth information/signal in the memory 204. The memory 204 may be connected to the processor 202 and may store various information related to the operation of the processor 202. For example, the memory 204 may store software code including instructions for performing some or all of processes controlled by the processor 202 or performing the descriptions, functions, procedures, proposals, methods, and/or operation flowcharts disclosed in the present document. Here, the processor 202 and the memory 204 may be portions of a communication modem/circuit/chip designed to implement wireless communication technology (e.g., LTE E-UTRA, 5G NR). The transceiver 206 may be connected to the processor 202 and may transmit and/or receive wireless signals through one or more antennas 208. The transceiver 206 may include a transmitter and/or a receiver. The transceiver 206 may be used interchangeably with an RF unit. In the present disclosure, the wireless device may refer to a communication modem/circuit/chip.

Hereafter, the hardware elements of the wireless devices 100 and 200 will be described in more detail. Although not limited thereto, one or more protocol layers may be implemented by the one or more processors 102 and 202. For example, the one or more processors 102 and 202 may implement one or more layers (e.g., functional layers such as PHY, MAC, RLC, PDCP, RRC, SDAP). The one or more processors 102 and 202 may generate one or more protocol data units (PDUs) and/or one or more service data units (SDUs) according to the descriptions, functions, procedures, proposals, methods, and/or operation flowcharts disclosed in the present document. The one or more processors 102 and 202 may generate messages, control information, data, or information according to the descriptions, functions, procedures, proposals, methods, and/or operation flowcharts disclosed in the present document. The one or more processors 102 and 202 may generate signals (e.g., baseband signals) including PDUs, SDUs, messages, control information, data, or information according to the functions, procedures, proposals, and/or methods disclosed in the present document and provide the signals to the one or more transceivers 106 and 206. The one or more processors 102 and 202 may receive signals (e.g., baseband signals) from the one or more transceivers 106 and 206 and obtain PDUs, SDUs, messages, control information, data, or information according to the descriptions, functions, procedures, proposals, methods, and/or operation flowcharts disclosed in the present document.

The one or more processors 102 and 202 may be referred to as a controller, a microcontroller, a microprocessor, or a microcomputer. The one or more processors 102 and 202 may be implemented by hardware, firmware, software, or a combination thereof. In an example, the one or more processors 102 and 202 may include one or more application specific integrated circuits (ASICs), one or more digital signal processors (DSPs), one or more digital signal processing devices (DSPDs), one or more programmable logic devices (PLDs), or one or more field programmable gate arrays (FPGAs). The descriptions, functions, procedures, proposals, methods, and/or operation flowcharts disclosed in the present document may be implemented using firmware or software, and the firmware or software may be implemented to include modules, procedures, functions, etc. The firmware or software configured to perform the descriptions, functions, procedures, proposals, methods, and/or operation flowcharts disclosed in the present document may be included in the one or more processors 102 and 202 or stored in the one or more memories 104 and 204 and executed by the one or more processors 102 and 202. The descriptions, functions, procedures, proposals, methods, and/or operation flowcharts disclosed in the present document may be implemented using firmware or software in the form of code, instructions, and/or sets of instructions.

The one or more memories 104 and 204 may be coupled to the one or more processors 102 and 202 and may store various forms of data, signals, messages, information, programs, codes, instructions, and/or commands. The one or more memories 104 and 204 may consist of ROM, RAM, EPROM, flash memory, hard drive, register, cache memory, computer-readable storage media, and/or a combination thereof. The one or more memories 104 and 204 may be located inside and/or outside the one or more processors 102 and 202. In addition, the one or more memories 104 and 204 may be connected to the one or more processors 102 and 202 using various technologies, such as wired or wireless connections.

The one or more transceivers 106 and 206 may transmit user data, control information, wireless signals/channels, and the like, as described in the methods and/or operational flowcharts of the present document, to one or more other devices. The one or more transceivers 106 and 206 may receive user data, control information, wireless signals/channels, and the like, as described in the methods and/or operational flowcharts of the present document, from one or more other devices. For example, the one or more transceivers 106 and 206 may be connected to the one or more processors 102 and 202 and may transmit and receive wireless signals. For example, the one or more processors 102 and 202 may control the one or more transceivers 106, 206 to transmit user data, control information, or wireless signals to one or more other devices. In addition, the one or more processors 102 and 202 may control the one or more transceivers 106 and 206 to receive user data, control information, or wireless signals from one or more other devices. In addition, the one or more transceivers 106 and 206 may be connected to the one or more antennas 108 and 208, and the one or more transceivers 106 and 206 may be configured to transmit and receive user data, control information, wireless signals/channels, and the like, as described in the descriptions, functions, procedures, proposals, methods, and/or operation flowcharts disclosed in the present document, via the one or more antennas 108 and 208. In the present document, the one or more antennas may be a plurality of physical antennas or a plurality of logical antennas (e.g., antenna ports). The one or more transceivers 106 and 206 may convert received user data, control information, wireless signals/channels, and the like from RF band signals into baseband signals to process the received user data, control information, wireless signals/channels, and the like using the one or more processors 102 and 202. The one or more transceivers 106 and 206 may convert user data, control information, wireless signals/channels, and the like processed using the one or more processors 102 and 202 from baseband signals into RF band signals. To this end, the one or more transceivers 106 and 206 may include an (analog) oscillator and/or a filter.

The detailed descriptions of exemplary embodiments of the present disclosure disclosed as described above are provided to enable those skilled in the art to implement and practice the present disclosure. Although the present disclosure has been described above with reference to various exemplary embodiments, those skilled in the art will understand that the present disclosure may be modified and changed variously without departing from the spirit and scope of the present disclosure. For example, those skilled in the art may use each of the components described in the above embodiments in combination with one another.

Accordingly, the present disclosure is not intended to be limited to the embodiments described herein but is intended to provide the broadest scope consistent with the principles and novel features disclosed herein.

## INDUSTRIAL APPLICABILITY

The method for sharing SI via a sidelink and the device therefor according to the above embodiments of the present disclosure are suitable for use in NTN application environments discussed in 3GPP, but as described above, they may also be widely applied to various situations in which individual acquisition of SI is difficult, even in communication systems other than 3GPP.

## Claims

1. A method for allowing a first user equipment (UE) to communicate with a network in a mobile communication system, the method comprising:

    receiving, by the first user equipment, a master information block (MIB) among system information (SI) from a specific cell of the network;
    receiving a system information block (SIB) 1 based on the MIB information; and
    transmitting the SI to a second user equipment via a sidelink when it is determined through information of the SIB 1 that the specific cell is a non-terrestrial network (NTN) cell.

2. The method of claim 1, wherein the SI transmitted to the second user equipment includes SIB 19 which is essential for NTN access, and
when the specific cell is the NTN cell and the second user equipment does not receive the SIB 19 from the sidelink, the second user equipment transmits a message requesting the SIB 19 to the first user equipment via the sidelink.

3. The method of claim 1, wherein the SI transmitted to the second user equipment includes SIB 19 which is essential for NTN access,

    when the specific cell is the NTN cell and the second user equipment receives the SIB 19 from the sidelink, the second user equipment drives a first timer having a validity duration for UL sync information from a time unit indicated by an epoch time, and
    when not re-receiving the SIB 19 before expiration of the first timer, the second user equipment transmits a SIB 19 request message to the first user equipment via the sidelink.

4. The method of claim 2, wherein the transmitting of the message requesting the SIB 19 via the sidelink is limited to a case in which reference signal received power (RSRP) or reference signal received quality (RSRQ) of the NTN cell measured at the second user equipment is a predetermined threshold or less.

5. The method of claim 2, wherein the transmitting of the message requesting the SIB 19 via the sidelink includes transmitting the message in a case in which the second user equipment operates in a power saving mode or to reduce power consumption.

6. The method of claim 1, wherein the transmitting of the SI to the second user equipment via the sidelink includes transmitting only the SI on an NTN cell in which the RSRP or RSRQ measured through one or more of a synchronization signal block (SSB) or channel state information-reference signal (CSI-RS) received from a plurality of NTN cells is a predetermined threshold or more.

7. The method of claim 1, wherein the first user equipment and the second user equipment are located in platooning vehicles, and
the first user equipment is located in a leading vehicle (LV), and the second user equipment is located in a following vehicle (FV).

8. The method of claim 1, wherein the NTN is located on a low-orbit satellite, and
the first user equipment is determined based on movement path information of the low-orbit satellite.

9. The method of claim 1, wherein the first user equipment is a user-to-network (U2N) relay user equipment, and
the second user equipment corresponds to a remote user equipment.

10. The method of claim 1, wherein the first user equipment and the second user equipment belong to a single user equipment group, and
the first user equipment corresponds to a group head user equipment.

11. A method for allowing a network to communicate with a first user equipment (UE) in a mobile communication system, the method comprising:

    transmitting, to the first user equipment, a master information block (MIB) among system information (SI) from a specific cell of the network; and

transmitting a system information block (SIB) 1 to the first user equipment based on the MIB information, wherein the network indicates through information of the SIB 1 that the specific cell is a non-terrestrial network (NTN) cell, thereby instructing the first user equipment to share the SI with the second user equipment via a sidelink.

**12.** The method of claim 11, wherein the SI transmitted to the second user equipment includes SIB 19 which is essential for NTN access, and
the SIB 19 includes an NTN configuration (NTN-Config) information element.

**13.** The method of claim 12, wherein the instruction to share the SI via the sidelink is performed through a specific field of the NTN configuration (NTN-Config) information element.

**14.** The method of claim 11, wherein the first user equipment and the second user equipment are located in platooning vehicles, and
the first user equipment is located in a leading vehicle (LV), and the second user equipment is located in a following vehicle (FV).

**15.** The method of claim 11, wherein the NTN is located on a low-orbit satellite, and
the network determines the first user equipment based on movement path information of the low-orbit satellite.

**16.** The method of claim 11, wherein the first user equipment is a user-to-network (U2N) relay user equipment, and the second user equipment corresponds to a remote user equipment.

**17.** The method of claim 11, wherein the first user equipment and the second user equipment belong to a single user equipment group, and
the first user equipment corresponds to a group head user equipment.

**18.** A device operating as a first user equipment (UE) which communicates with a network in a mobile communication system, the device comprising:

at least one processor; and
at least one computer memory which is operably connected to the at least one processor and stores instructions which cause the at least one processor to perform operations when executed,
wherein the operations include:

receiving, by the first user equipment, a master information block (MIB) among system information (SI) from a specific cell of the network;
receiving a system information block (SIB) 1 based on the MIB information; and
transmitting the SI to a second user equipment via a sidelink when it is determined through information of the SIB 1 that the specific cell is a non-terrestrial network (NTN) cell.

**19.** A network which communicates with a first user equipment (UE) in a mobile communication system, the network comprising:

at least one processor; and
at least one computer memory which is operably connected to the at least one processor and stores instructions which cause the at least one processor to perform operations when executed,
wherein the operations include:

transmitting, to the first user equipment, a master information block (MIB) among system information (SI) from a specific cell of the network; and
transmitting a system information block (SIB) 1 to the first user equipment based on the MIB information, wherein the network indicates through information of the SIB 1 that the specific cell is a non-terrestrial network (NTN) cell, thereby instructing the first user equipment to share the SI with the second user equipment via a sidelink.

# FIG. 1

NTN in a wide sense
3GPP work on NTN
3GPP work on UAV
Not to scale
600km & above
20km
10km
1520m
Ground level
Satellite network
(110)
High altitude platform station
as IMT base station(HIBS)
(120)
Air-to-ground network
(130)
UAV
(aka. drone)
(150)
Urban
Rural
(140b)
Remote
(140a)

FIG. 2

UE N
UE 2
UE 1
gNB
Receive SI(MIB + SIBs)
(S210)
Share SI(MIB&SIBs)
(S220)
Share SI(MIB&SIBs)
(S230)
SI updata
(S240)

# FIG. 3

UE N
UE 2
UE 1
gNB
Receive MIB
(S310)
Receive SIBs
(S320)
Share SIBs
(S330)
Share SIBs
(S340)
SI updata
(S350)

FIG. 4

UE
Network
MIB
(S410)
SIB 1
(S420)
System Information Request
(S430)
System Information messages
(S440)

FIG. 5

UE2
UE1
Network
MIB
(S510)
SIB 1
(S520)
NTN Cell?
(S530)
. . .
SIB 19
(S540)
Sharing SI via SL
(S550)

# FIG. 6

UE2
UE1
Network
Sharing SI via SL
(S550)
SIB 19?
(S610)
SIB 19
(S540)
Request SIB 19
(S620)
SIB1 19
(S630)

# FIG. 7

UE2
UE1
Network
Sharing SI via SL
(S550)
Srat 1st Timer
(S710)
SIB 19
(S720)
1st Timer expired?
(S730)
Request SIB 19
(S740)
SIB1 19
(S750)

# FIG. 8

Network
First user equipment
Second user equipment
Resource scheduling
(S8000)
PSCCH
(S8010)
PSSCH
(S8020)
PSFCH
(S8030)
PUCCH/PUSCH
(S8040)
(a)
First user equipment
Second user equipment
PSCCH
(S8010)
PSSCH
(S8020)
PSFCH
(S8030)
(b)

FIG. 9

Back Office
900
V2I
V2I
V2I
V2I
Platooning Control System
V2V
V2V
V2V
V2V
940
910
920
930
Join
Leave
950
Platooning
Platooning Manoeuvre Control Function
Platooning Operation Control Function

FIG. 10

Remote UE
Relay UE
gNB
1. Discovery
1. PC5 Connection Establishment
2. RRCSetupRequest
2. RRCSetup
3. Prepare PC5 and Uu Relay RLC channel for SR B1
4. RRCSetupComplete
5. Security Mode Command
5. SecurityModeComplete
6. RRCReconfiguration
6. RRCReconfigurationComplete
6.Prepare PC5 and Uu Relay RLC channel for SRB2/DRB

FIG. 11
200
Second Device
Processor(s)
Memory(s)
Transceiver(s)
202
204
206
208
108
100
First Device
Transceiver(s)
Processor(s)
Memory(s)
106
102
104

## INTERNATIONAL SEARCH REPORT

International application No.
**PCT/KR2024/005743**

**A. CLASSIFICATION OF SUBJECT MATTER**

**H04W 48/08**(2009.01)i; **H04W 72/25**(2023.01)i; **H04W 52/02**(2009.01)i; **H04W 4/40**(2018.01)i; **H04W 24/08**(2009.01)i; **H04B 17/318**(2015.01)i; **G08G 1/00**(2006.01)i; **H04W 84/06**(2009.01)i; **H04W 88/04**(2009.01)i; **H04W 88/06**(2009.01)i

According to International Patent Classification (IPC) or to both national classification and IPC

**B. FIELDS SEARCHED**

Minimum documentation searched (classification system followed by classification symbols)

H04W 48/08(2009.01); H04B 7/185(2006.01); H04W 36/00(2009.01); H04W 36/08(2009.01); H04W 4/70(2018.01); H04W 48/02(2009.01); H04W 48/04(2009.01); H04W 48/12(2009.01); H04W 8/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SI, MIB, SIB1, NTN 셀(NTN cell), 사이드링크(sidelink)

**C. DOCUMENTS CONSIDERED TO BE RELEVANT**

| Category* | Citation of document, with indication, where appropriate, of the relevant passages | Relevant to claim No. |
|---|---|---|
| Y | WO 2022-153238 A1 (TELEFONAKTIEBOLAGET LM ERICSSON (PUBL)) 21 July 2022 (2022-07-21)<br>See pages 82-83, Group A Embodiments 5 and 8-9. | 1,7-11,14-19 |
| A | | 2-6,12-13 |
| Y | CN 115314862 A (HUAWEI TECHNOLOGIES CO., LTD.) 08 November 2022 (2022-11-08)<br>See claim 1. | 1,7-11,14-19 |
| A | US 2023-0269635 A1 (APPLE INC.) 24 August 2023 (2023-08-24)<br>See paragraphs [0119]-[0123]; and figure 10. | 1-19 |
| A | US 2023-0276343 A1 (QUALCOMM INCORPORATED) 31 August 2023 (2023-08-31)<br>See paragraphs [0096]-[0104]; and figures 6-8. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 August 2024** | **19 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/005743

C. DOCUMENTS CONSIDERED TO BE RELEVANT

| Category* | Citation of document, with indication, where appropriate, of the relevant passages | Relevant to claim No. |
|---|---|---|
| A | US 2022-0109496 A1 (QUALCOMM INCORPORATED) 07 April 2022 (2022-04-07)<br>See paragraphs [0151]-[0174]; and figure 8. | 1-19 |

Form PCT/ISA/210 (second sheet) (July 2022)

**INTERNATIONAL SEARCH REPORT**
**Information on patent family members**

International application No.
**PCT/KR2024/005743**

| Patent document cited in search report | Publication date (day/month/year) | Patent family member(s) | Publication date (day/month/year) |
|---|---|---|---|
| WO 2022-153238 A1 | 21 July 2022 | CN 117044303 A | 10 November 2023 |
| | | CO 2023010468 A2 | 28 August 2023 |
| | | EP 4278698 A1 | 22 November 2023 |
| | | US 2024-0080758 A1 | 07 March 2024 |
| CN 115314862 A | 08 November 2022 | WO 2022-233257 A1 | 10 November 2022 |
| US 2023-0269635 A1 | 24 August 2023 | CN 116391391 A | 04 July 2023 |
| | | WO 2022-082632 A1 | 28 April 2022 |
| US 2023-0276343 A1 | 31 August 2023 | None | |
| US 2022-0109496 A1 | 07 April 2022 | CN 116325552 A | 23 June 2023 |
| | | EP 4222889 A1 | 09 August 2023 |
| | | WO 2022-072907 A1 | 07 April 2022 |

Form PCT/ISA/210 (patent family annex) (July 2022)